# EUROPÄISCHE PATENTSCHRIFT

(11) **EP 0 752 329 B1**
(45) Veröffentlichungstag und Bekanntmachung des Hinweises auf die Patenterteilung: **07.08.2002**
(21) Anmeldenummer: 96108368.0
(22) Anmeldetag: 25.05.1996
(51) Int. Cl.: B60G 17/015

(54) **Radaufhängungsregelsystem**
Suspension control system
Système de réglage de suspension

(30) Priorität: 07.07.1995 DE 19524730
(43) Veröffentlichungstag der Anmeldung: 08.01.1997
(73) Patentinhaber: Bayerische Motoren Werke Aktiengesellschaft, 80788 München (DE)
(72) Erfinder: Jurr, Reinhold, 81247 München (DE); Pfeil, Dirk, 31515 Wurmstorf (DE); Zieglmeier, Franz, 80809 München (DE); Dettloff, Günter, 85386 Eching (DE)

(56) Entgegenhaltungen:
- DE-A- 4 131 077

## Beschreibung

Die Erfindung bezieht sich auf ein Radaufhängungsregelsystem zum Einstellen eines Sollabstands zwischen dem Fahrzeugaufbau und jedem Rad eines Kraftfahrzeugs mit Mitteln zur Erkennung eines Schiefstands und mit Mitteln zur Bestimmung eines schiefstandsbezogenen Sollabstands.

Ein derartiges Radaufhängungsregelsystem ist beispielsweise aus der DE 40 01 485 A1 bekannt. Bei der DE 40 01 485 A1 wird davon ausgegangen, daß das Kraftfahrzeug, wenn es auf einer krummen oder deformierten Straßenoberfläche schief steht und zum Stillstand kommt, einen Gleichgewichtszustand einnimmt, bei dem einige Radaufhängungen in einem verlängerten oder ausgedehnten Zustand und andere Radaufhängungen in einem verkürzten oder zusammengezogenen Zustand sind. Bei Fahrzeugen mit einem aktiven Radaufhängungsregelsystem wird üblicherweise versucht, das Ziel einer Einstellung einer Referenzfahrzeughöhe, d.h. eines gewünschten Sollabstands zwischen dem Fahrzeugaufbau und jedem Rad, zu erreichen.

Bei der DE 40 01 485 A1 ist ein Radaufhängungsregelsystem vorgesehen, bei der zur Erkennung des Schiefstands die Aufhängunghübe des linken und rechten Rades einer Achse mit der Referenzfahrzeughöhe verglichen werden, um über die Abweichungen von der Referenzfahrzeughöhe z.B. eine Quemeigung der Straßenoberfläche zu erkennen.
Bei dem aus der DE 40 01 485 A1 bekannten Radaufhängungsregelsystem wird daraufhin die Fahrzeughöheneinstellvorrichtung bezüglich eines Radaufhängungspaares von der Vorder- oder Hinterachse zum Erzielen der Referenzfahrzeughöhe sowohl für das linke als auch das rechte Rad dieses einen Aufhängungspaares derart gesteuert, daß das Fahrzeug an dem diesem Aufhängungspaar zugeordneten Fahrzeugendteil eine Lage einnimmt, die der Querneigung der Straßenoberfläche angepaßt ist. Daraufhin werden die Aufhängungspaare der jeweils anderen Achse an diese Lage angepaßt.

Bei diesem bekannten Radaufhängungsregelsystem mit einer radweisen Regelung kommt es bei jedem Schiefstand nur einer Achse zu einem Regelvorgang, der nacheinander den Schiefstand beider Achsen vollständig ausregelt. Wird dieser Schiefstand, z.B. beim Abfahren von einem Bordstein wieder aufgehoben, ist eine erneute Regelung beider Achsen erforderlich. Hierbei entsteht eine erhöhte Verstellhäufigkeit, wodurch Verschleißerscheinungen beschleunigt werden. Wird im Gegenzug bei einem Schiefstand die Regelung vollständig verhindert, besteht die Gefahr, daß nach einem Schiefstand, z.B. nach einer Beladung oder einer Bordsteinabfahrt, die Bodenfreiheit derart eingeschränkt ist, daß dadurch Beschädigungen am Fahrzeug auftreten können.

Weiterhin ist aus der DE 41 31 077 A1 ein Niveauregelsystem bekannt, bei dem auf eine Schiefstandserkennung hin die Hydraulikleitungen zwischen den Radaufhängungsvorrichtungen der linken und rechten Fahrzeugseite miteinander verbunden werden, um den Schiefstand zu verringern. Die Mittel zur Erkennung des Schiefstands weisen eine sensorvorrichtung zur Erfassung der Istabstände des Fahrzeugaufbaus von jedem Rad einer Achse und eine Auswertevorrichtung auf, die die Differenz der erfaßten Istabstände einer Achse mit einem vorgegebenen Schiefstandsschwellwert vergleicht.

Es ist Aufgabe der Erfindung, ein Radaufhängungsregelsystem vorstehend, genannter Art derart zu verbessern, daß ein Kompromiß zwischen erhöhter Regelhäufigkeit und Regelverhinderung erreicht wird.

Diese Aufgabe wird durch die kennzeichnenden Merkmale des Anspruchs 1 gelöst.

Nach Patentanspruch 1 weisen die Mittel zur Bestimmung eines schiefstandsbezogenen Sollabstands eine Auswertevorrichtung auf, die für die Räder einer Achse den Mittelwert der erfaßten Istabstände bildet und bei Erkennung eines Schiefstands den schiefstandsbezogenen Sollabstand durch vorzeichenrichtige Addition des Istabstands jedes Rades mit der Differenz zwischen dem Mittelwert und einem Sollabstand, der ohne Schiefstand vorgegeben werden würde, bestimmt.
Vorzugsweise wird nach einer Schiefstandserkennung die schiefstandsbezogene Sollhöhe nur dann tatsächlich eingestellt, wenn die Differenz zwischen dem Sollabstand, der ohne Schiefstand vorgegeben werden würde, und dem Mittelwert der erfaßten Istabstände einen vorgegebenen Wert überschreitet. Diese Bedingung wird insbesondere durch eine Beladung des Fahrzeugs während des Schiefstandes erreicht.

Durch diese erfindungsgemäße Maßnahme wird der Verschleiß des Radaufhängungsregelsystems dadurch vermindert, daß alternativ oder zusätzlich zur Reduzierung der Regelhäufigkeit auch die Regelgröße vermindert wird. Bei einem Schiefstand muß also nicht die bei einer üblichen Regelung normalerweise vorgegebene Referenzfahrzeughöhe eingestellt werden, wodurch eine stärkere Verstellung notwendig wäre, sondern lediglich ein verbesserter Gleichgewichtszustand hergestellt werden. Hierdurch wird einerseits der Verschleiß des Radaufhängungsregelsystems vermindert und andererseits eine Beschädigung am Kraftfahrzeug, z.B. bei Bordsteinabfahrt, wirksam verhindert. Weiterhin hat die erfindungsgemäße Maßnahme den Vorteil, daß nach einem Schiefstand, insbesondere wenn das Fahrzeug während des Schiefstands beladen wurde, automatisch ein gleichmäßiger Abstand der Räder einer Achse zum Fahrzeugaufbau vorliegt. Auch hierdurch wird die Regelhäufigkeit erniedrigt, da ein sofortiges Nachregeln nach dem Schiefstand nicht zwingend notwendig ist.

Nach Patentanspruch 2 weisen die Mittel zur Erkennung des Schiefstands eine Sensorvorrichtung zur Erfassung der Istabstände des Fahrzeugaufbaus von jedem Rad einer Achse und eine Auswertevorrichtung auf, die die Differenz der erfaßten Istabstände einer Achse mit einem vorgegebenen Schiefstandsschwellwert vergleicht.
Vorzugsweise wird der Schiefstandsschwellwert höher als die größtmögliche Differenz der Istabstände der Räder einer Achse gewählt, die bei Schiefbeladung ohne Schiefstand auftreten kann. Da die Erkennung des Schiefstands nicht in Verbindung mit der üblicherweise vorgegebenen Sollfahrzeugaufbauhöhe vorgenommen wird, sondern lediglich bei Überschreiten eines vorgegebenen Schiefstandsschwellwerts durch die Differenz der Abstände des Fahrzeugaufbaus von jedem Rad einer Achse, wird die Schiefstandserkennung des erfindungsgemäßen Radaufhängungsregelsystems unempfindlicher gemacht. Vorzugsweise wird die Schiefstandserkennung ausgeschaltet, wenn die Differenz der Abstände eine weitere gegenüber dem Schiefstandsschwellwert niedrigere Schwelle unterschreitet. Durch diese, an sich aus der Schrift DE-A-4 131 077 bekannten, Maßnahmen wird die Regelhäufigkeit und damit der Verschleiß eines Radaufhängungsregelsystems reduziert.

Weitere vorteilhafte Ausgestaltungen der Erfindung sind die Gegenstände der Patenansprüche 3 und 4.
Um eine sicherheitskritische Schiefstandsregelung während der Fahrt zu verhindert, wird nach Patentanspruch 3 das erfindungsgemäße Radaufhängungsregelsystem bei zumindest nahe zu stehendem Kraftfahrzeug eingeschaltet.
Um beispielsweise Reparaturarbeiten am Federbein ohne Abschaltung des Steuergeräts durchführen zu können und dabei das Bordnetz bzw. die Batterie nicht unnötig zu belasten, wird die erfindungsgemäße Schiefstandserkennung und Schiefstandsregelung nur bei laufender Brennkraftmaschine eingeschaltet.

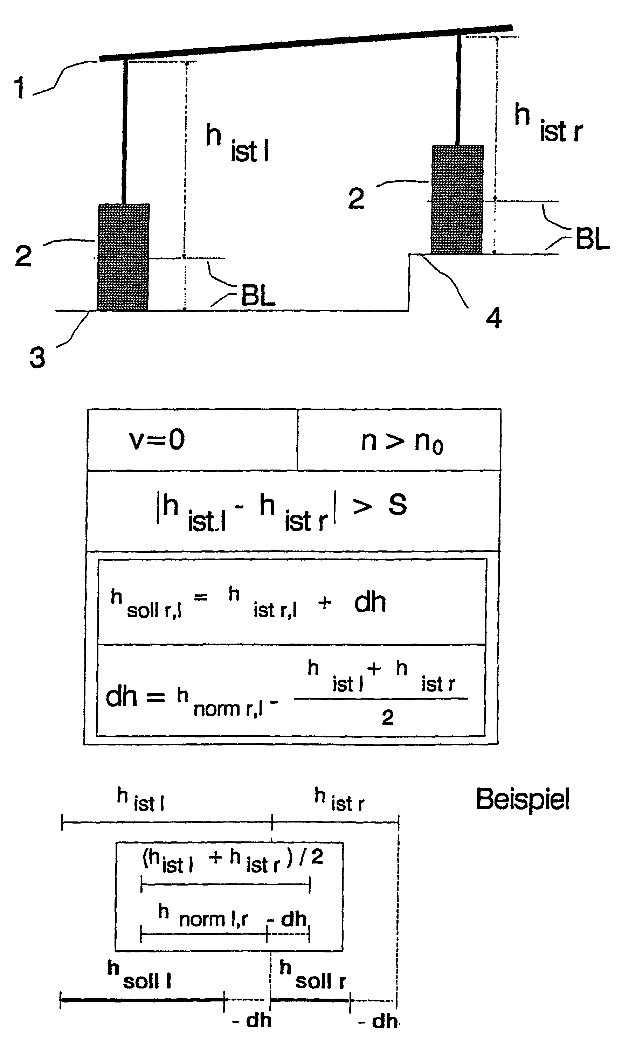

In der Zeichnung ist ein Ausführungsbeispiel der Erfindung dargestellt. Sie zeigt schematisch die Abstände des Fahrzeugaufbaus von den Rädern einer Achse während eines Schiefstands sowie die erfindungsgemäße Erkennung des Schiefstands und Bestimmung eines schiefstandsbezogenen Sollabstands.

Der Fahrzeugaufbau 1 eines schematisch im Schiefstand dargestellten Kraftfahrzeuges weist einen ersten Istabstand h_{ist l} zum linken Rad 2 einer Achse und einen zweiten Istabstand h_{ist r} zum rechten Rad 2 einer Achse auf. Das linke Rad 2 der Achse steht auf einer Fahrbahn 3. Das rechte Rad 2 der Achse steht gegenüber der Fahrbahn 3 erhöht auf einem Bordstein 4. Entweder die Achse durch die Radnaben der Räder 2 oder die Aufstandsflächen, d.h. die Fahrbahn 3 bzw. der Randstein 4, der Räder 2 bilden die Bezugslinien BL zur Definition der jeweiligen Istabstände zum Fahrzeugaufbau 1. Durch den Schiefstand des Kraftfahrzeugs stellt sich ein unsymmetrischer Gleichgewichtszustand ein, wodurch sich eine Differenz der Istabstände h_{ist r} und h_{ist l} der Räder 2 einer Achse zum Fahrzeugaufbau 1 ergibt.

Bei stehendem Kraftfahrzeug, d.h. bei einem Geschwindigkeitswert v = 0, sowie bei laufender Brennkraftmaschine, d.h. bei einem Brennkraftmaschinendrehzahlwert n, der größer als ein vorgegebener Schwellwert n₀ ist, werden folgende Auswertungen vorgenommen:

Zunächst wird der Betrag der Differenz zwischen den Istabständen h_{ist l} und h_{ist r} des linken und rechten Rades 2 ermittelt und mit einem Schiefstandsschwellwert S verglichen. Liegt diese Differenz oberhalb des Schiefstandsschwellwerts S, wird erkannt, daß das Kraftfahrzeug schief steht. Erfahrungsgemäß tritt insbesondere bei einer Beladung des Fahrzeugs während des Schiefstands eine Differenz dh zwischen dem Mittelwert der erfaßten Istabstände h_{ist l} und h_{ist r} und dem für jedes Rad 2 üblicherweise gleich vorgegebenen Sollabstand h_{norm r, l} auf.

Ist diese Differenz dh vorzugsweise größer als ein vorgegbener Wert, wird der schiefstandsbezogene Sollabstand h_{soll r, l,} d. h. der schiefstandsbezogene Sollabstand h_{soll r} für das rechte Rad 2 einer Achse und der schiefstandsbezogene Sollwert h_{soll l} für das linke Rad 2 der Achse folgendermaßen berechnet und eingestellt:

Zunächst wird der Mittelwert, (h_{ist l} + h_{ist r}) 2 der erfaßten Istabstände für das linke und rechte Rad 2 einer Achse ermittelt. Daraufhin wird dieser Mittelwert vom Sollabstand h_{norm r, l}, der ohne Schiefstand für jedes Rad 2 vorzugsweise gleich vorgegeben werden würde, subtrahiert. Diese Abweichung dh wird anschließend zu dem jeweiligen Istabstand h_{ist r} und h_{ist l} der Räder 2 zum Fahrzeugaufbau 1 hinzuaddiert. Dieses Ergebnis bestimmt den schiefstandsbezogenen Sollabstand h_{soll r, l}, d. h. h_{soll r} und h_{soll l}. An einem Beispiel für das rechte Rad 2 und für das linke Rad 2, das gegenüber dem rechten Rad 2 tiefer gestellt ist, wird im unteren Diagramm der Figur die Erfindung nochmals graphisch dargestellt.

Während ohne Schiefstandserkennung üblicherweise die Sollabstände der Räder zum Fahrzeugaufbau gleich sind, werden sie erfindungsgemäß bei Schiefstandserkennung unabhängig voneinander unterschiedlich vorgegeben und eingestellt.

Die erfindungsgemäße Schiefstandserkennung und Schiefstandsregelung ist nicht nur bei aktiven Radaufhängungssystemen, z. B. mit Luft- oder Hydraulik-Feder-/Dämpfungssystemen, für eine Achse sondern auch für zwei Achsen, d. h. für mehr als zwei regelbare Radaufhängungen anwendbar.

Somit wird der Verschleiß durch reduzierte Regeltätigkeit vermindert und Beschädigungen durch ausreichende Bodenfreiheit verhindert.

## Patentansprüche

1. Radaufhängungsregelsystem für Kraftfahrzeuge zum Einstellen eines Sollabstands zwischen dem Fahrzeugaufbau und jedem Rad einer Achse mit Mitteln zur Erkennung eines Schiefstands und mit Mitteln zur Bestimmung eines schiefstandsbezogenen Sollabstands, **dadurch gekennzeichnet, daß** die Mittel zur Bestimmung eines schiefstandsbezogenen Sollabstands (h_{soll r,l}) eine Auswertevorrichtung aufweisen, die für die Räder (2) einer Achse den Mittelwert der erfaßten Istabstände (h_{ist r}, h_{ist l}) bildet und bei Erkennung eines Schiefstands den schiefstandsbezogenen Sollabstand (h_{soll r,l}) durch Addition des Istabstands (h_{ist r}, h_{ist l}) jedes Rades (2) mit der Differenz (dh) zwischen diesem Mittelwert und einem Soltabstand (h_{norm r,l}), der ohne Schiefstand vorgegeben werden würde, bestimmt.

2. Radaufhängungsregelsystem nach Patentanspruch 1, **dadurch gekennzeichnet, daß** die Mittel zur Erkennung des Schiefstands eine Sensorvorrichtung zur Erfassung der Istabstände (h_{ist r}, h_{ist l}) des Fahrzeugaufbaus (1) von jedem Rad (2) einer Achse und eine Auswertevorrichtung aufweisen, die die Differenz der erfaßten Istabstände (h_{ist r}, h_{ist l}) einer Achse mit einem vorgegebenen Schiefstandsschwellwert (S) vergleicht.

3. Radaufhängungssystem nach Patentanspruch 1 oder 2, **dadurch gekennzeichnet, daß** die Mittel zur Erkennung eines Schiefstands und/oder die Mittel zur Bestimmung eines schiefstandsbezogenen Sollabstands (h_{soll r,l}) nur bei zumindest nahezu stehendem Kraftfahrzeug (v=0) eingeschaltet sind.

4. Radaufhängungssystem nach einem der Patentansprüche 1 bis 3, **dadurch gekennzeichnet, daß** die Mittel zur Erkennung eines Schiefstands und/oder die Mittel zur Bestimmung eines schiefstandsbezogenen Sollabstands (h_{soll r,l;} h_{soll l,} h_{soll r,}) nur bei laufender Brennkraftmaschine (n>n₀) eingeschaltet sind.

## Claims

1. A suspension control system for setting a required separation between the vehicle body and each wheel of a motor vehicle, with means for detecting a canted position and with means for determining a required separation related to a canted position, **characterised in that** the means for determining a canted position related required separation (hsoll r,l) have an evaluating device, which forms the mean value of the detected actual separations (h_{ist r}, h_{ist l}) for the wheels (2) on one axle and on detecting a canted position determines the required separation (h_{soll r, l}) related to the canted position by the addition of the actual separation (h_{ist r,} h_{ist l}) of each wheel (2) to the difference (dh) between this mean value and a required separation (h_{nomr r, l}), which would be given without the canted position.

2. A suspension control system in accordance with Claim 1, **characterised in that** the means for detecting a canted position have a sensor device for detecting the actual separation (h_{ist l}, h_{ist r}) of the vehicle body (1) from each wheel (2) on an axle and an evaluating device, which compares the detected actual separations (h_{ist r,} h_{ist l}) on one axle with a prescribed canted position threshold value (S).

3. A suspension control system in accordance with Claim 1 or Claim 2, **characterised in that** the means for detecting a canted position and/or the means for determining the canted position related required separation (h_{soll r,l}) are only switched on with an at least almost stationary vehicle (v =0).

4. A suspension control system in accordance with one of the Claims 1 to 3, **characterised in that** the means for detectig a canted position and/or the means for determining the canted position related required separation (h_{soll r, l,} h_{soll l}, h_{soll r}) are only switched on with the internal combustion engine running.

## Revendications

1. Système de régulation de suspension de roues pour véhicules automobiles, pour régler la distance de consigne entre la carrosserie du véhicule et chaque roue d'un essieu, comprenant des moyens pour détecter une position inclinée et des moyens pour déterminer une distance de consigne rapportée à la position inclinée,
**caractérisé en ce que**
les moyens pour déterminer une distance de consigne (h_{cons r}, h_{cons l}), rapportée à la position inclinée comportent un dispositif d'exploitation qui forme la valeur moyenne des distances réelles saisies (h_{reel r}, h_{reel l}), des roues (2) d'un essieu et, qui, en cas de détection d'une position inclinée, détermine la distance de consigne (h_{cons r, l}) rapportée à la position inclinée par l'addition de la distance réelle (h_{reel r}, h_{reel l}) de chaque roue (2) et de la différence (dh) entre cette valeur moyenne et une distance de consigne (h_{norm r,l}) qui existerait en l'absence de position inclinée.

2. Système de régulation de suspension de roues selon la revendication 1,
**caractérisé en ce que**
les moyens pour détecter la position inclinée comportent un dispositif de capteur pour saisir la distance réelle (h_{reel r}, h_{reel l}) de la carrosserie (1) du véhicule par rapport à chaque roue (2) d'un essieu et un dispositif d'exploitation qui compare la différence des distances réelles saisies (h_{reel r}, h_{reel l}) d'un essieu à un seuil de position inclinée (S), prédéterminé.

3. Système de régulation de suspension de roues selon l'une quelconque des revendications 1 ou 2,
**caractérisé en ce que**
les moyens pour détecter une position inclinée et/ou les moyens pour déterminer une distance de consigne (h_{cons r,l}), rapportés à la position inclinée ne sont mis en oeuvre que lorsque le véhicule est pratiquement à l'arrêt (v = 0).

4. Système de régulation de suspension de roues selon l'une quelconque des revendications 1 à 3,
**caractérisé en ce que**
les moyens pour détecter une position inclinée et/ou les moyens pour déterminer une distance de consigne rapportée à une position inclinée (h_{cons r, l}, h_{cons l}, h_{cons r}) ne sont mis en oeuvre que lorsque le moteur à combustion interne fonctionne (n>n₀).
